# FASCICULE DE BREVET EUROPEEN

(11) **EP 1 857 732 B1**
(45) Date de publication et mention de la délivrance du brevet: **02.09.2009**
(21) Numéro de dépôt: 07290623.3
(22) Date de dépôt: 15.05.2007
(51) Int. Cl.: F21S 8/12

(54) **Dispositif d'éclairage et/ou de signalisation pour véhicule automobile**
Vorrichtung zur Beleuchtung und/oder Signalisierung für Kraftfahrzeuge
Lighting and/or signalling device for an automobile

(30) Priorité: 16.05.2006 FR 0604341
(43) Date de publication de la demande: 21.11.2007
(73) Titulaire: VALEO VISION, 93012 Bobigny Cedex (FR)
(72) Inventeur: De Lamberterie, Antoine, 75019 Paris (FR)

(56) Documents cités:
- DE-A1- 4 341 801
- DE-A1- 10 022 420
- JP-A- 2000 331 507

## Description

La présente invention concerne les dispositifs d'éclairage ou de signalisation pour véhicules automobiles. Plus particulièrement, la présente invention concerne un dispositif d'éclairage de véhicule automobile permettant de réaliser des faisceaux lumineux de formes variées tout en conservant une intensité assez importante pour permettre de réaliser un feu de signalisation comme par exemple les feux diurnes dits feux « DRL » (pour Daytime Running Light en anglais).

Un tel dispositif comporte généralement :
- au moins une source lumineuse qui émet des rayons lumineux;
- au moins une nappe de guidage de la lumière, dans laquelle se propagent les rayons lumineux issus de la source lumineuse par réflexions successives

II est courant de rassembler dans un seul boîtier plusieurs fonctions d'éclairage ou de signalisation, de manière à simplifier le câblage électrique de ces différentes fonctions dans un véhicule automobile. Chaque fonction comporte une source lumineuse, en général un réflecteur et éventuellement une glace, ces différents éléments étant agencés pour fournir un faisceau d'éclairage ou de signalisation dont les caractéristiques géométriques et photométriques doivent être conformes à différentes réglementations.

Une solution pour agencer plusieurs fonctions dans un même boîtier est d'utiliser des guides de lumière de manière à permettre ainsi un gain de place.

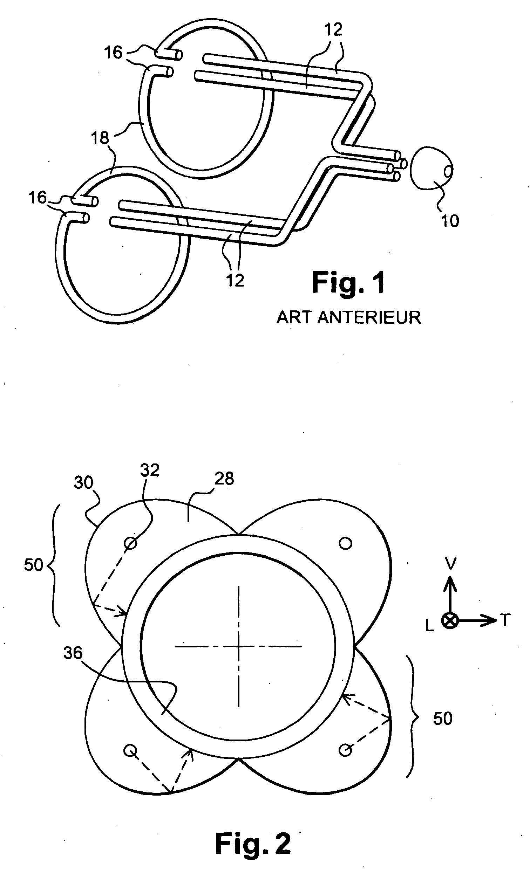

On connaît déjà les guides de lumière 18, représentés dans l'exemple de la figure 1. Les guides de lumière 18 sont configurés pour s'étendre selon un motif circulaire et ils sont disposés par exemple de manière à entourer le périmètre avant d'un projecteur de faisceau de croisement. Ils comportent généralement une face formée d'une succession de prismes ou de stries, et une face de sortie, cylindrique ou torique. Les prismes ou stries de la face renvoient les rayons lumineux se propageant dans le guide vers la face de sortie qui en fournit un faisceau de sortie, qui peut par exemple remplir la fonction de lampe de ville dans un projecteur.

Une telle solution est particulièrement onéreuse, puisqu'elle nécessite une source lumineuse telle qu'une lampe halogène, un réflecteur elliptique 10, un faisceau souple de fibres optiques 12 et un guide de lumière moulé 18 dont une des faces est usinée pour former sur elle des prismes ou des stries.

De plus, cette solution présente comme inconvénient que les rayons lumineux qui se propagent dans le guide sont déviés par les stries ou les prismes de manière incontrôlée, ce qui provoque de nombreuses pertes d'intensité lumineuse. Le faisceau lumineux produit est peu intense par rapport à la source utilisée au départ.

Pour certaines fonctions nécessitant une forte intensité, il est nécessaire d'avoir des sources à fort flux qui sont soit chères, soit de nature à poser des problèmes thermiques, comme par exemple des lampes de type halogène, rendant la conception du système global onéreuse.

D'autre part, la structure périodique des stries ou des prismes se retrouve dans le faisceau émergeant, de sorte que le guide de lumière présente un aspect fortement inhomogène.

Aussi, les guides de lumière formant un contour fermé présentent des inhomogénéités et souvent des points lumineux d'intensité plus importante au niveau du coude 16 dans la matière du guide de lumière 18, ce qui dégrade encore la qualité de la fonction éclairante et la qualité esthétique du dispositif.

Enfin, cette solution présente l'inconvénient d'un encombrement important pour pouvoir loger la source lumineuse, le réflecteur 10, les fibres optiques 12 et les guides de lumière 18.

Le document EP-A-1.557.605 propose un autre dispositif d'éclairage combinant plusieurs réflecteurs, des fibres optiques, des guides de lumière et qui nécessite une source lumineuse de type lampe à halogène. Bien que cette solution permette d'inclure un certain nombre de fonctions avec une même lampe, elle est coûteuse à réaliser.

Le document DE 43 41 801 divulgue un dispositif d'éclairage pour véhicule comprenant des sources lumineuses et des guides de lumières ayant une face d'entrée par laquelle la lumière d'une source lumineuse entre et une face de sortie par laquelle la lumière sort dans un réflecteur. Le guide de lumière est courbé.

Les documents antérieurs ne proposent pas de solutions efficaces pour obtenir un faisceau de lumière avec une forme particulière et d'intensité assez forte pour réaliser une fonction d'éclairage comme la fonction DRL.

Afin de répondre à cette problématique, la présente invention propose un dispositif d'éclairage et/ou de signalisation du type décrit précédemment tel que la nappe de guidage comporte à une extrémité une tranche réfléchissante de manière à (toujours) rediriger les rayons lumineux dans la nappe, et tel qu'un contour de sortie de la nappe, à l'extrémité opposée à la tranche réfléchissante, comporte un profil réfléchissant, notamment incliné par rapport à l'axe longitudinal de la nappe, de manière à réfléchir les rayons lumineux réfléchis globalement dans une direction longitudinale d'émission qui est substantiellement parallèle à cet axe longitudinal.

Dans le cadre de la présente invention, les termes « profil réfléchissant » ou « tranche réfléchissante » se rapportant à la nappe de guidage désignent leur fonction optique : les surfaces concernées sont aptes à réfléchir (au moins en partie) les rayons qui les atteignent. Mais ces termes peuvent recouvrir tout moyen optique permettant cette réflexion, dont deux intéressant plus particulièrement l'invention, à savoir :
- un traitement de la surface concernée la rendant réfléchissante intrinsèquement, quel que soit son profil. Il s'agit notamment du dépôt d'un revêtement réfléchissant de faible épaisseur, notamment un aluminage par des techniques connues.
- un choix du profil de la surface concernée en fonction de l'angle d'incidence des rayons à réfléchir, de façon à ce que les rayons soient réfléchis sur ladite surface selon le principe de la réflexion totale.

Il est aussi dans le cadre de l'invention d'associer ces deux moyens de réflexion sur la même surface : on peut ainsi déposer une couche réfléchissante sur une partie de cette surface et interrompre la couche sur le reste de la surface qui « fonctionne », elle, en réflexion totale. La délimitation entre la zone à aluminer et la zone en réflexion totale peut être déterminée précisément par un opticien.

Selon d'autres caractéristiques de l'invention :
- la nappe de guidage s'étend dans un plan substantiellement transversal à la direction d'émission,
- le contour de sortie possède un profil en arc de cercle concave, pouvant notamment se situer dans un plan transverse au bord de la nappe de guidage;
- la tranche réfléchissante de la nappe de guidage comporte un profil tel que tout rayon réfléchi sur ladite tranche réfléchissante atteigne substantiellement perpendiculairement le contour de sortie ;
- la tranche réfléchissante de la nappe de guidage possède un profil de type ellipsoïdal et la source lumineuse est agencée à un premier foyer du profil ellipsoïdal et le centre du contour en arc de cercle de sortie est agencé à un deuxième foyer de manière que tout rayon réfléchi sur ladite tranche réfléchissante atteigne substantiellement perpendiculairement le contour de sortie ;
- la tranche réfléchissante de la nappe de guidage comporte des optiques de Fresnel de manière que tout rayon réfléchi sur ladite tranche réfléchissante arrive substantiellement perpendiculairement au contour de sortie ;
- le contour de sortie comporte une face de sortie, dans un plan globalement transversal et décalé longitudinalement par rapport à la nappe de guidage et en ce que la face de sortie comporte un profil dont la forme est telle que les rayons lumineux issus de la nappe forment un faisceau de sortie globalement parallèle à l'axe longitudinal du dispositif ;
- la nappe de guidage est une nappe en courbe s'étendant vers l'arrière du dispositif ;
- le dispositif d'éclairage comporte une nappe de guidage dite pliée qui comporte :
   - un premier tronçon s'étendant dans un plan transversal; et
   - un deuxième tronçon s'étendant dans un plan longitudinal et agencé substantiellement perpendiculairement par rapport au premier tronçon
   et la jonction entre le premier tronçon et le deuxième tronçon de la nappe de guidage comporte une face réfléchissante, notamment inclinée par rapport à l'axe longitudinal, de manière à réfléchir les rayons réfléchis vers le contour de sortie de la nappe de guidage ;
- la source lumineuse est agencée au premier foyer du profil ellipsoïdal d'une tranche réfléchissante, dans le premier tronçon de la nappe de guidage dite pliée ;
- la source lumineuse est agencée au premier foyer du profil ellipsoïdal de la tranche réfléchissante, dans le deuxième tronçon de la nappe de guidage dite pliée ;
- la source lumineuse est de préférence une diode électroluminescente, notamment qui émet des rayons lumineux radialement. De préférence, elle émet autour de l'axe longitudinal dans un cône d'au plus 50° d'ouverture, notamment d'environ 30° par rapport au plan transversal du dispositif ;
- la nappe de guidage comporte:
   - une cavité cylindrique dont le fond est plan en une surface arrière par rapport à la direction d'émission et dans laquelle est agencée la source lumineuse; et
   - une forme de prisme de révolution sur une surface avant par rapport à la direction d'émission, réalisée en vis à vis de la cavité cylindrique de manière à réfléchir tous les rayons issus de la source lumineuse à l'intérieur de la nappe de guidage
   et la source lumineuse est une source lumineuse qui émet des rayons longitudinalement dans la direction générale d'émission ;
- la source lumineuse comporte une source de lumière agencée à l'extrémité d'un guide de lumière et l'autre extrémité du guide de lumière est agencée dans la cavité de fond plan de manière à diriger les rayons lumineux dans la nappe de guidage.

L'invention concerne aussi un module d'éclairage et/ou de signalisation pour véhicule automobile qui comporte plusieurs dispositifs décrits précédemment, qui sont radialement répartis autour de l'axe longitudinal du module dans un plan transversal de manière à réaliser un faisceau de lumière annulaire.

Selon d'autres caractéristiques, le module d'éclairage et/ou comporte au moins quatre dispositifs, comportant chacun une source lumineuse et une nappe de guidage, radialement répartis de manière à réaliser un faisceau de lumière annulaire.

D'autres caractéristiques et avantages de l'invention apparaîtront au cours de la lecture de la description détaillée qui suit pour la compréhension de laquelle on se reportera aux figures annexées dans lesquelles:
- la figure 1 déjà commentée est une vue en perspective d'un mode de réalisation de l'art antérieur ;
- la figure 2 est une vue schématique dans un plan transversal du dispositif selon la présente invention ;
- la figure 3 est une vue schématique d'un dispositif d'éclairage selon l'invention ;
- la figure 4 est une coupe selon l'axe 4-4 indiqué à la figure 3 du dispositif selon l'invention ;
- la figure 5 est une coupe selon l'axe 5-5 indiqué à la figure 3 du dispositif selon l'invention ;
- la figure 6 est une vue schématique dans un plan longitudinal d'une partie du dispositif selon un autre mode de réalisation de l'invention ; et
- la figure 7 est une coupe longitudinale du dispositif de l'invention représentant une variante de réalisation.

Dans la description suivante, des éléments analogues, identiques ou similaires seront désignés par les mêmes chiffres de référence.

Dans la description qui va suivre, on emploiera la terminologie longitudinale, verticale et transversale en référence au trièdre L, V, T représentés sur les figures et avant et arrière en référence à la direction générale d'émission indiquée sur les figures par la flèche F.

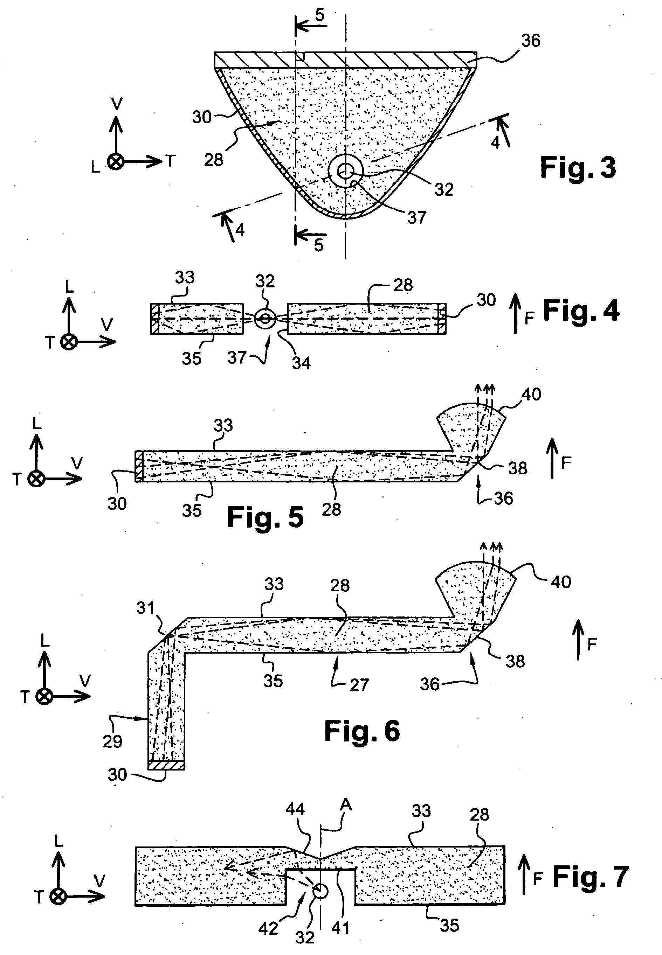

On a représenté à la figure 3, une vue dans un plan transversal d'un dispositif d'éclairage pour véhicule automobile selon l'invention. Dans cet exemple de réalisation, le dispositif comporte principalement une nappe de guidage 28, une tranche réfléchissante 30, une source lumineuse 32 agencée dans un orifice 37 et un contour de sortie 36.

La nappe de guidage 28 est fabriquée dans un matériau transparent d'indice de réfraction supérieur à l'indice de réfraction de l'air comme le verre ou un plastique. La nappe de guidage 28 délimitée longitudinalement par deux surfaces avant 33 et arrière 35 qui travaillent en réflexion totale : les rayons lumineux pénétrant par une tranche d'entrée 34 dans la nappe de guidage 28 se propagent dans l'épaisseur de la nappe par réflexions successives sur les surfaces avant 33 et arrière 35. Selon une variante de réalisation de l'invention, la nappe de guidage 28 est réalisée dans un matériau ayant un fort indice de réfraction de manière que des rayons lumineux y pénétrant s'y propagent par réflexions successives.

Selon le mode de réalisation de l'invention représentée à la figure 3, la nappe de guidage 28 est une nappe plane qui s'étend dans le plan transversal du dispositif.

Dans des variantes de réalisations, la nappe de guidage 28 pourra être courbe ou de toute autre forme de manière à occuper le moins de place possible dans le module d'éclairage tout en conservant les mêmes propriétés optiques de réflexion des rayons lumineux. On reviendra sur un mode de réalisation particulier de la nappe de guidage 28 dans la suite de la description.

La tranche réfléchissante 30 est une extrémité de la nappe de guidage 28. Cette tranche réfléchissante 30 est agencée dans le plan longitudinal de manière à réfléchir dans la nappe de guidage 28 tout rayon lumineux se propageant dans la nappe 28.

Selon une variante de réalisation de l'invention, la tranche réfléchissante 30 comporte une surface interne réfléchissante permettant de rediriger les rayons lumineux dans la nappe de guidage 28 par réflexion. Par exemple la tranche réfléchissante est en partie ou totalement aluminée pour réfléchir les rayons dans la nappe 28.

Selon une variante non représentée de l'invention, on remplace la surface réfléchissante de la tranche réfléchissante 30 par des miroirs de Fresnel agencés selon le profil de la tranche réfléchissante 30 de manière à envoyer les rayons lumineux réfléchis perpendiculairement au contour de sortie 36.

La tranche réfléchissante 30 possède un profil adapté à la forme du contour de sortie 36 de manière que tout rayon réfléchi sur la tranche 30 atteigne le contour de sortie 36 perpendiculairement dans le plan longitudinal.

La source lumineuse 32 est agencée dans l'orifice 37 pour émettre des rayons lumineux par une tranche d'entrée 34 dans la nappe de guidage 28 comme illustré à la figure 4.

La source lumineuse est avantageusement conçue de manière qu'elle émet des rayons radialement autour de son axe longitudinal comme illustré à la figure 4. Plus précisément la source lumineuse émet des rayons à 360° autour de son axe longitudinal et dans un cône d'environ 30° par rapport à l'axe transversal de la nappe de guidage 28.

Une telle source peut être par exemple une diode électroluminescente dite "Side-Emitter" agencée dans l'orifice 37 cylindrique d'axe longitudinal réalisé dans la nappe de guidage 28. Ainsi les rayons issus de cette source atteignent perpendiculairement la tranche d'entrée 34 et entrent dans la nappe de guidage 28. Les rayons ayant pénétré dans la nappe 28 sont réfléchis par la tranche réfléchissante 30 de manière à être redirigé vers le contour de sortie 36.

Le contour de sortie 36, agencé à l'autre extrémité de la nappe de guidage 28 et représenté en coupe longitudinale à la figure 5, comporte un profil réfléchissant 38 et une face de sortie 40.

Le profil réfléchissant 38 est incliné par rapport à l'axe longitudinal de manière que tout rayon issu de la nappe de guidage 28 atteignant perpendiculairement le profil réfléchissant 38 est réfléchi hors du plan transversal du contour de sortie 36, dans une direction longitudinale d'émission F pour réaliser une fonction d'éclairage ou de signalisation.

Dans le cas d'une nappe de guidage 28 plane agencée dans le plan transversale du dispositif, l'angle de 45° est préconisé.

Le contour de sortie 36 comporte aussi une face de sortie 40 qui s'étend globalement dans un plan transversal. La face de sortie 40 possède un profil, par exemple convexe, de manière à collimater les rayons sortant de la nappe de guidage 28 afin de créer un faisceau d'éclairage ayant des rayons globalement parallèles.

Le contour de sortie 36 est agencé de manière que tout rayon réfléchi par la tranche réfléchissante 30 arrive perpendiculairement au contour de sortie 36 dans le plan transversal.

Pour un contour de sortie 36 linéaire dans le plan transversal, comme illustré sur la figure 3, la tranche réfléchissante 30 possède un profil parabolique.

Pour un contour de sortie 36 présentant des courbures dans le plan transversal, la tranche réfléchissante 30 possède un profil ellipsoïdal adapté à chacune des courbures du contour de sortie 36 de manière à toujours réfléchir les rayons perpendiculairement au contour de sortie 36.

Avantageusement par rapport aux dispositifs connus de la technique, le dispositif de l'invention tel que décrit ci-dessus permet d'obtenir des résultats photométriques beaucoup plus satisfaisants, notamment en obtenant un faisceau de sortie d'intensité beaucoup plus importante que si on avait utilisé un dispositif de l'art antérieur avec une source lumineuse de même intensité.

Dans l'exemple de réalisation de la figure 3, le contour de sortie 36 est linéaire dans le plan transversal. Le faisceau d'éclairage réalisé dans ce cas sera un faisceau linéaire.

Selon un autre mode de réalisation, on remplace le contour de sortie 36 linéaire par un contour de sortie de forme quelconque de manière à réaliser un faisceau d'éclairage ayant une forme quelconque dans la mesure où la tranche réfléchissante 30 possède un profil tel qu'il permette de rediriger les rayons perpendiculairement au contour de sortie 36 comme expliqué précédemment.

La figure 2 représente une forme particulière de contour de sortie 36 de manière à réaliser un faisceau de sortie de forme annulaire.

Le dispositif éclairant, représenté à la figure 2, est composé ici de quatre secteurs 50 égaux, régulièrement répartis autour de l'axe longitudinal et comportant chacun, notamment une nappe de guidage 28, une source lumineuse 32 et un contour de sortie 36 en arc de cercle, plus particulièrement en quart de cercle.

Les quatre secteurs 50 agencés ensemble permettent de réaliser un anneau de lumière assez intense en sortie de la nappe de guidage 28 pour réaliser par exemple une fonction d'e signalisation. Il peut s'agir d'une fonction de feu diurne (DRL pour « Day Running Light » en anglais. Dans ce cas, la tranche réfléchissante 30 possède un profil de type ellipsoïdal. La source lumineuse 32 est agencée au premier foyer du profil ellipsoïdal de la tranche réfléchissante 30, le contour de sortie 36 est agencé de manière que le centre de l'arc de cercle coïncide avec le deuxième foyer du profil ellipsoïdal de la tranche réfléchissante 30.

Selon une variante non représentée de l'invention, le dispositif est composé de deux à autant de secteurs 50, régulièrement répartis autour de l'axe longitudinal, qu'il est nécessaire pour former un faisceau de forme annulaire.

Toutefois, la configuration en quatre secteurs est celle qui présente l'avantage d'occuper le moins de place possible et de présenter les résultats photométriques les plus avantageux. En effet, avec quatre sources lumineuses de type diode électroluminescente "side-emitter" chacune d'une puissance de 35 Lm, on obtient un faisceau annulaire d'intensité maximale d'environ 1800 Cd, alors qu'avec les techniques antérieures on n'atteignait qu'environ 160 Cd avec quatre diodes de puissance équivalente.

Cette configuration nécessite quelques améliorations pour homogénéiser le faisceau de sortie lorsqu'on l'observe sous un certain angle par rapport à l'axe longitudinal.

Selon une variante non représentée de réalisation, on réalise le profil réfléchissant 38 de manière qu'il soit légèrement concave et que sa courbure varie suivant la position sur l'anneau pour éviter que le faisceau ne devienne inhomogène au-delà d'un certain angle d'observation par rapport à l'axe longitudinal. Ceci permet de disperser ou de concentrer localement les rayons lumineux dans le plan transversal et de rendre plus homogène l'ensemble de l'anneau pour un observateur, quel que soit l'angle d'observation.

Selon une autre variante, on réalise la face de sortie 40 de la nappe de guidage 28 de manière à concentrer ou disperser les rayons lumineux émergeants suivant la position sur l'anneau. En effet, on conçoit une face de sortie 40 convexe et dont le rayon de courbure varie selon la position sur l'anneau de la même manière que pour le profil réfléchissant 38 décrit précédemment.

Pour gérer l'homogénéité, on peut aussi réaliser des stries au niveau de la face de sortie 40, stries qui seront plus ou moins concentrées selon la position sur l'anneau, de manière à concentrer ou disperser les rayons lumineux émergeants.

Afin de pouvoir adapter le dispositif dans un module d'éclairage existant dont l'espace disponible est limité, une variante de réalisation de l'invention propose de "plier" la nappe de guidage comme représenté à la figure 6. Le reste du dispositif de l'invention reste inchangé.

La figure 6 est une coupe dans un plan longitudinal d'une nappe de guidage 28b dite pliée. Précisons que la nappe de guidage dite pliée 28b n'est pas obtenue par pliage de la nappe de guidage 28. Contrairement à une nappe de guidage 28 décrite précédemment, la nappe de guidage dite pliée 28b comporte deux tronçons s'étendant dans des plans différents.

La nappe de guidage 28b "pliée" comporte un premier tronçon 27 s'étendant dans un plan transversal et un second tronçon 29 s'étendant dans un plan longitudinal.

Les deux tronçons de nappe 27 et 29 forment une seule et même nappe de guidage 28b qui est apte à diriger la lumière sans discontinuités de la même manière qu'une nappe de guidage 28 non pliée décrite précédemment.

A cet effet, la nappe de guidage pliée 28b comporte une face de réflexion 31, agencée entre le premier tronçon 27 et le second tronçon 29 de manière à réfléchir la lumière depuis la tranche de réflexion 30, qui reste inchangée, jusqu'au contour de sortie 36 qui reste inchangé.

L'angle d'inclinaison par rapport à l'axe longitudinal de la face de réflexion 31 est choisi de manière à rendre le pliage de la nappe optiquement neutre par rapport à une nappe non pliée.

Dans le cas présent où les deux tronçons de nappe sont perpendiculaires, l'angle de 45° est préconisé pour cette configuration.

La source lumineuse 32, quant à elle, peut être agencée soit dans le premier tronçon 27 ou dans le second tronçon 29.

Si la source lumineuse 32 est agencée dans le premier tronçon 27, une partie des rayons est réfléchie directement par le profil réfléchissant 38 et une partie des rayons subit une réflexion sur la face de réflexion 31 puis une réflexion sur la tranche réfléchissante 30 puis de nouveau sur la face de réflexion 3 puis sur le profil réfléchissant 38 pour enfin émerger par la face de sortie 40.

Si la source lumineuse 32 est agencée dans le deuxième tronçon 29, les rayons subissent une réflexion sur la tranche réfléchissante 30 puis sur la face de réflexion 31 puis sur le profil réfléchissant 38 pour enfin émerger par la face de sortie 40.

La figure 7 représente une variante d'emplacement de la source lumineuse 32 dans la nappe de guidage 28.

Précédemment, la source lumineuse 32 était agencée dans l'orifice 37 au sein de la nappe de guidage 28.

Dans le cas de la figure 4, la source 32 utilisée est une diode électroluminescente de type "side-emitter", c'est-à-dire, une diode qui émet des rayons lumineux radialement autour de l'axe longitudinal dans un cône d'environ 30° par rapport au plan transversal du dispositif. Une telle diode donne une répartition de lumière de type révolution en envoyant la lumière radialement par rapport à l'axe longitudinal de la source lumineuse 32.

Selon une variante de l'invention représentée à la figure 7, la nappe de guidage 28 n'est plus percée par un orifice 37, mais elle comporte en sa surface arrière 35 une cavité cylindrique 42, agencée symétriquement par rapport à un axe A et destinée à recevoir la source lumineuse 32. La cavité cylindrique 42 est située au premier foyer du profil ellipsoïdal de la tranche réfléchissante 30 et comporte un fond 41 plan, contre lequel la source lumineuse 32 est agencée.

Avantageusement par rapport au mode de réalisation précédent, la cavité cylindrique 42 permet l'agencement de n'importe quelle type de source lumineuse, y compris les sources lumineuses de type diodes classiques, émettant de la lumière selon l'axe longitudinal, beaucoup moins coûteuses que les diodes dites "side-emitter".

De plus, la nappe de guidage 28 comporte en sa surface avant 33, un prisme de révolution conique concave 44, creusé dans la surface avant 33 de la nappe 28 selon le même axe A que la cavité 42, ce qui permet de réfléchir radialement les rayons émis longitudinalement par la source lumineuse 32 dans la nappe de guidage 28. On obtient ainsi le même effet qu'en utilisant une diode dite "side-emitter".

Ce mode de réalisation permet de choisir des sources beaucoup plus variées et moins coûteuses comme des diodes classiques émettant des rayons longitudinalement ou bien encore l'extrémité d'un guide optique agencé dans la cavité 42 qui achemine les rayons lumineux d'une source lumineuse située à un autre emplacement et envoyant des rayons lumineux par l'autre extrémité du guide optique. Ce mode de réalisation permet aussi de récupérer le maximum de rayonnement émis par la source lumineuse 32, grâce au prisme de révolution ainsi taillé dans la nappe de guidage 28.

En effet, cette configuration permet à une partie des rayons réfléchis qui recroiseraient la source lumineuse 32 de passer au-dessus de la source 32 ce qui augmente encore les performances de ce dispositif.

La présente invention ne se limite pas aux modes de réalisations décrits dans ce document, elle comprend aussi les variantes et les combinaisons des modes de réalisations précédemment décrits.

## Revendications

1. Dispositif d'éclairage et/ou de signalisation pour véhicule automobile pour éclairer dans une direction longitudinale d'émission (F), du type comportant :
- au moins une source lumineuse (32) qui émet des rayons lumineux,
- au moins une nappe de guidage (28) de la lumière, dans laquelle se propagent les rayons lumineux issus de la source lumineuse (32) par réflexions successives,
**caractérisé en ce que** la nappe de guidage (28) comporte à une extrémité une tranche réfléchissante (30) de manière à rediriger les rayons lumineux dans la nappe (28), et **en ce qu'**un contour de sortie (36) de la nappe, (28), à l'extrémité opposée à la tranche réfléchissante (30), comporte un profil réfléchissant (38), notamment incliné par rapport à l'axe longitudinal de ladite nappe, (28) de manière à réfléchir les rayons lumineux réfléchis globalement dans une direction d'émission (F) qui est substantiellement parallèle audit axe longitudinal.

2. Dispositif d'éclairage et/ou de signalisation selon la revendication 1, **caractérisé en ce que** la nappe de guidage (28) s'étend dans un plan substantiellement transversal à la direction d'émission (F).

3. Dispositif d'éclairage et/ou de signalisation selon l'une quelconque des revendications 1 ou 2, **caractérisé en ce que** le contour de sortie (36) possède un profil en arc de cercle concave, notamment dans un plan substantiellement transverse au bord de la nappe de guidage 28.

4. Dispositif d'éclairage et/ou de signalisation selon l'une quelconque des revendications 1 à 3, **caractérisé en ce que** la tranche réfléchissante (30) de la nappe de guidage (28) comporte un profil tel que tout rayon réfléchi sur ladite tranche réfléchissante(30) atteigne substantiellement perpendiculairement le contour de sortie (36).

5. Dispositif d'éclairage et/ou de signalisation selon l'une quelconque des revendications 1 à 4, **caractérisé en ce que** la tranche réfléchissante (30) de la nappe de guidage (28) possède un profil de type ellipsoïdal et **en ce que** la source lumineuse (32) est agencée à un premier foyer du profil ellipsoïdal et le centre du contour en arc de cercle de sortie (36) est agencé à un deuxième foyer de manière que tout rayon réfléchi sur ladite tranche réfléchissante(30) atteigne substantiellement perpendiculairement le contour de sortie (36)

6. Dispositif d'éclairage et/ou de signalisation selon l'une quelconque des revendications 1 à 5, **caractérisé en ce que** la tranche réfléchissante (30) de la nappe de guidage (28) comporte des optiques de Fresnel de manière que tout rayon réfléchi sur ladite tranche réfléchissante (30) arrive substantiellement perpendiculairement au contour de sortie (36)

7. Dispositif d'éclairage et/ou de signalisation selon l'une quelconque des revendications 1 à 6, **caractérisé en ce que** le contour de sortie (36) comporte une face de sortie (40), dans un plan globalement transversal et décalé longitudinalement par rapport à la nappe de guidage (28) et **en ce que** la face de sortie (40) comporte un profil dont la forme est telle que les rayons lumineux issus de la nappe (28) forment un faisceau de sortie globalement parallèle à l'axe longitudinal du dispositif.

8. Dispositif d'éclairage et/ou de signalisation selon l'une quelconque des revendications 3 à 7, **caractérisé en ce que** la nappe de guidage (28) est une nappe en courbe s'étendant vers l'arrière du dispositif.

9. Dispositif d'éclairage et/ou de signalisation selon l'une quelconque des revendications 1 à 7, **caractérisé en ce qu'**il comporte une nappe de guidage dite pliée (28b) qui comporte :
- un premier tronçon (27) s'étendant dans un plan transversal ; et
- un deuxième tronçon (29) s'étendant dans un plan longitudinal et agencé substantiellement perpendiculairement par rapport au premier tronçon (27)
et **en ce que** la jonction entre le premier tronçon (27) et le deuxième tronçon (29) de la nappe de guidage (28) comporte une face réfléchissante (31), notamment inclinée par rapport à l'axe longitudinal de la nappe, de manière à réfléchir les rayons réfléchis vers le contour de sortie (36) de la nappe de guidage (28b).

10. Dispositif d'éclairage et/ou de signalisation selon la revendication 9, **caractérisé en ce que** la source lumineuse (32) est agencée au premier foyer du profil ellipsoïdal d'une tranche réfléchissante (30), dans le premier tronçon (27) de la nappe de guidage dite pliée (28b).

11. Dispositif d'éclairage et/ou de signalisation selon la revendication 9, **caractérisé en ce que** la source lumineuse (32) est agencée au premier foyer du profil ellipsoïdal de la tranche réfléchissante (30), dans le deuxième tronçon (29) de la nappe de guidage dite pliée (28b).

12. Dispositif d'éclairage et/ou de signalisation selon l'une quelconque des revendications précédentes, **caractérisé en ce que** la source lumineuse (32) est une diode électroluminescente, émettant des rayons lumineux radialement, notamment autour de l'axe longitudinal dans un cône d'environ au plus 50°, notamment d'environ 30°, par rapport au plan transversal du dispositif

13. Dispositif d'éclairage et/ou de signalisation selon l'une quelconque des revendications 2 à 12, **caractérisé en ce que** la nappe de guidage (28) comporte:
- une cavité cylindrique (42) dont le fond (41) est plan en une surface arrière (35) par rapport à la direction d'émission (F) et dans laquelle est agencée la source lumineuse (32);et
- une forme de prisme de révolution (44) sur une surface avant (33) par rapport à la direction d'émission (F), réalisée en vis à vis de la cavité cylindrique (42) de manière à réfléchir tous les rayons issus de la source lumineuse (32) à l'intérieur de la nappe de guidage (28)
et **en ce que** la source lumineuse (32) est une source lumineuse qui émet des rayons longitudinalement dans la direction générale d'émission (F).

14. Dispositif d'éclairage et/ou de signalisation selon la revendication 13, **caractérisé en ce que** la source lumineuse (32) comporte une source de lumière agencée à l'extrémité d'un guide de lumière et **en ce que** l'autre extrémité du guide de lumière est agencée dans la cavité (42) de fond (41) plan de manière à diriger les rayons lumineux dans la nappe de guidage (28).

15. Module d'éclairage et/ou de signalisation pour véhicule automobile **caractérisé en ce qu'**il comporte plusieurs dispositifs décrits dans les revendications précédentes radialement répartis autour de l'axe longitudinal du module dans un plan transversal de manière à réaliser un faisceau de lumière annulaire.

16. Module d'éclairage et/ou de signalisation pour véhicule automobile selon la revendication 15, **caractérisé en ce qu'**il comporte au moins quatre dispositifs, comportant chacun une source lumineuse et une nappe de guidage, radialement répartis de manière à réaliser un faisceau de lumière annulaire.

## Claims

1. Lighting and/or signalling device for a motor vehicle for lighting in a longitudinal emission direction (F), of the type comprising:
- at least one light source (32) emitting light rays,
- at least one light guiding sheet (28) in which the light rays issuing from the light source (32) spread by successive reflections,
**characterised in that** the guide sheet (28) comprises at one end a reflective layer (30) so as to redirect the light rays into the sheet (28), and **in that** an output contour (36) of the sheet (28), at the end remote from the reflective layer (30), comprises a reflective profile (38), in particular inclined relative to the longitudinal axis of said sheet (28), so as to reflect the light rays reflected generally in an emission direction (F) which is substantially parallel to said longitudinal axis.

2. Lighting and/or signalling device according to Claim 1, **characterised in that** the guide sheet (28) extends in a plane substantially transverse to the emission direction (F).

3. Lighting and/or signalling device according to either Claim 1 or Claim 2, **characterised in that** the output contour (36) has a concave arc of a circle-shaped profile, in particular in a plane substantially transverse to the edge of the guide sheet (28).

4. Lighting and/or signalling device according to any one of Claims 1 to 3, **characterised in that** the reflective layer (30) of the guide sheet (28) comprises a profile such that any ray reflected onto said reflective layer (30) reaches substantially perpendicularly the output contour (36).

5. Lighting and/or signalling device according to any one of Claims 1 to 4, **characterised in that** the reflective layer (30) of the guide sheet (28) has an ellipsoidal-type profile and **in that** the light source (32) is arranged at a first focal point of the ellipsoidal profile and the centre of the arc of a circle-shaped output contour (36) is arranged at a second focal point in such a way that any ray reflected onto said reflective layer (30) reaches substantially perpendicularly the output contour (36).

6. Lighting and/or signalling device according to any one of Claims 1 to 5, **characterised in that** the reflective layer (30) of the guide sheet (28) comprises Fresnel optics in such a way that any ray reflected onto said reflective layer (30) arrives substantially perpendicularly to the output contour (36).

7. Lighting and/or signalling device according to any one of Claims 1 to 6, **characterised in that** the output contour (36) comprises an output face (40), in a plane generally transverse and longitudinally offset relative to the guide sheet (28), and **in that** the output face (40) comprises a profile, the shape of which is such that the light rays issuing from the sheet (28) form an output beam generally parallel to the longitudinal axis of the device.

8. Lighting and/or signalling device according to any one of Claims 3 to 7, **characterised in that** the guide sheet (28) is a curved sheet extending toward the rear of the device.

9. Lighting and/or signalling device according to any one of Claims 1 to 7, **characterised in that** it comprises what is known as a folded guide sheet (28b) comprising:
- a first portion (27) extending in a transverse plane; and
- a second portion (29) extending in a longitudinal plane and arranged substantially perpendicularly relative to the first portion (27)
and **in that** the junction between the first portion (27) and the second portion (29) of the guide sheet (28) comprises a reflective face (31), in particular inclined relative to the longitudinal axis of the sheet, so as to reflect the rays reflected toward the output contour (36) of the guide sheet (28b).

10. Lighting and/or signalling device according to Claim 9, **characterised in that** the light source (32) is arranged at the first focal point of the ellipsoidal profile of a reflective layer (30), in the first portion (27) of what is known as the folded guide sheet (28b).

11. Lighting and/or signalling device according to Claim 9, **characterised in that** the light source (32) is arranged at the first focal point of the ellipsoidal profile of the reflective layer (30), in the second portion (29) of what is known as the folded guide sheet (28b).

12. Lighting and/or signalling device according to any one of the preceding claims, **characterised in that** the light source (32) is a light emitting diode, emitting light rays radially, in particular about the longitudinal axis in a cone of approximately at most 50°, in particular approximately 30°, relative to the transverse plane of the device.

13. Lighting and/or signalling device according to any one of Claims 2 to 12, **characterised in that** the guide sheet (28) comprises:
- a cylindrical cavity (42), the base (41) of which is planar in a rear surface (35) relative to the emission direction (F) and in which the light source (32) is arranged; and
- a prism shape generated by revolution (44) on a front surface (33) relative to the emission direction (F), formed with respect to the cylindrical cavity (42) so as to reflect all rays issuing from the light source (32) within the guide sheet (28)
and **in that** the light source (32) is a light source emitting rays longitudinally in the general emission direction (F).

14. Lighting and/or signalling device according to Claim 13, **characterised in that** the light source (32) comprises a source of light arranged at the end of a light guide and **in that** the other end of the light guide is arranged in the cavity (42) having a planar base (41) so as to direct the light rays into the guide sheet (28).

15. Lighting and/or signalling module for a motor vehicle, **characterised in that** it comprises a plurality of devices described in the preceding claims radially distributed about the longitudinal axis of the module in a transverse plane so as to form an annular light beam.

16. Lighting and/or signalling module for a motor vehicle according to Claim 15, **characterised in that** it comprises at least four devices, each comprising a light source and a guide sheet, radially distributed so as to form an annular light beam.

## Patentansprüche

1. Beleuchtungs- und/oder Signalgebungsvorrichtung für Kraftfahrzeuge zum Leuchten in eine Lichtabgabelängsrichtung (F), von der Art, die umfasst:
- wenigstens eine Lichtquelle (32), die Lichtstrahlen emittiert,
- wenigstens eine Lichtleitfläche (28), in der sich die von der Lichtquelle (32) abgegebenen Lichtstrahlen durch aufeinanderfolgende Reflexionen ausbreiten,
**dadurch gekennzeichnet, dass** die Lichtleitfläche (28) an einem Ende einen Reflexionsabschnitt (30) aufweist, um die Lichtstrahlen in die Lichtleitfläche (28) zurückzuleiten, und dass eine Austrittskontur (36) der Lichtleitfläche (28) an dem Ende, das dem Reflexionsabschnitt (30) entgegengesetzt ist, ein Reflexionsprofil (38) aufweist, das insbesondere schräg zur Längsachse der Lichtleitfläche (28) verläuft, um die reflektierten Lichtstrahlen allgemein in eine Lichtabgaberichtung (F) zu reflektieren, die im Wesentlichen zur Längsachse parallel ist.

2. Beleuchtungs- und/oder Signalgebungsvorrichtung nach Anspruch 1,
**dadurch gekennzeichnet, dass** sich die Lichtleitfläche (28) in einer zur Lichtabgaberichtung (F) im Wesentlichen quer verlaufenden Ebene erstreckt.

3. Beleuchtungs- und/oder Signalgebungsvorrichtung nach einem der Ansprüche 1 oder 2,
**dadurch gekennzeichnet, dass** die Austrittskontur (36) insbesondere in einer zum Rand der Lichtleitfläche (28) im Wesentlichen quer verlaufenden Ebene ein konkaves Kreisbogenprofil besitzt.

4. Beleuchtungs- und/oder Signalgebungsvorrichtung nach einem der Ansprüche 1 bis 3,
**dadurch gekennzeichnet, dass** der Reflexionsabschnitt (30) der Lichtleitfläche (28) ein solches Profil aufweist, dass jeder am Reflexionsabschnitt (30) reflektierte Lichtstrahl im Wesentlichen lotrecht zur Austrittskontur (36) gelangt.

5. Beleuchtungs- und/oder Signalgebungsvorrichtung nach einem der Ansprüche 1 bis 4,
**dadurch gekennzeichnet, dass** der Reflexionsabschnitt (30) der Lichtleitfläche (28) ein Profil vom ellipsoiden Typ besitzt, und dass die Lichtquelle (32) in einem ersten Brennpunkt des ellipsoiden Profils angeordnet ist und der Mittelpunkt der kreisbogenförmigen Austrittskontur (36) in einem zweiten Brennpunkt angeordnet ist, so dass jeder am Reflexionsabschnitt (30) reflektierte Lichtstrahl im Wesentlichen lotrecht zur Austrittskontur (36) gelangt.

6. Beleuchtungs- und/oder Signalgebungsvorrichtung nach einem der Ansprüche 1 bis 5,
**dadurch gekennzeichnet, dass** der Reflexionsabschnitt (30) der Lichtleitfläche (28) Fresnel-Optiken derart aufweist, dass jeder am Reflexionsabschnitt (30) reflektierte Lichtstrahl im Wesentlichen lotrecht zur Austrittskontur (36) gelangt.

7. Beleuchtungs- und/oder Signalgebungsvorrichtung nach einem der Ansprüche 1 bis 6,
**dadurch gekennzeichnet, dass** die Austrittskontur (36) eine Austrittsfläche (40) in einer allgemein quer verlaufenden und zur Lichtleitfläche (28) in Längsrichtung versetzten Ebene aufweist, und dass die Austrittsfläche (40) ein Profil aufweist, das so geformt ist, dass die von der Lichtleitfläche (28) abgegebenen Lichtstrahlen ein zur Längsachse der Vorrichtung allgemein paralleles Austrittslichtbündel bilden.

8. Beleuchtungs- und/oder Signalgebungsvorrichtung nach einem der Ansprüche 3 bis 7,
**dadurch gekennzeichnet, dass** die Lichtleitfläche (28) eine gekrümmte Fläche ist, die sich zum hinteren Teil der Vorrichtung erstreckt.

9. Beleuchtungs- und/oder Signalgebungsvorrichtung nach einem der Ansprüche 1 bis 7,
**dadurch gekennzeichnet, dass** sie eine gebogene Lichtleitfläche (28b) aufweist, wobei:
- sich ein erster Abschnitt (27) in einer Querebene erstreckt; und
- sich ein zweiter Abschnitt (29) in einer Längsebene erstreckt und dieser bezüglich des ersten Abschnitts (27) im Wesentlichen lotrecht angeordnet ist,
und dass die Verbindung zwischen dem ersten Abschnitt (27) und dem zweiten Abschnitt (29) der Lichtleitfläche (28) eine Reflexionsfläche (31) aufweist, die insbesondere zur Längsachse der Lichtleitfläche geneigt ist, damit die reflektierten Lichtstrahlen zur Austrittskontur (36) der Lichtleitfläche (28b) reflektiert werden.

10. Beleuchtungs- und/oder Signalgebungsvorrichtung nach Anspruch 9,
**dadurch gekennzeichnet, dass** die Lichtquelle (32) im ersten Brennpunkt des ellipsoiden Profils eines Reflexionsabschnitts (30) im ersten Abschnitt (27) der gebogenen Lichtleitfläche (28b) angeordnet ist.

11. Beleuchtungs- und/oder Signalgebungsvorrichtung nach Anspruch 9,
**dadurch gekennzeichnet, dass** die Lichtquelle (32) im ersten Brennpunkt des ellipsoiden Profils des Reflexionsabschnitts (30) im zweiten Abschnitt (29) der gebogenen Lichtleitfläche (28b) angeordnet ist.

12. Beleuchtungs- und/oder Signalgebungsvorrichtung nach einem der vorhergehenden Ansprüche,
**dadurch gekennzeichnet, dass** die Lichtquelle (32) eine Leuchtdiode ist, die bezüglich der Querebene der Vorrichtung Lichtstrahlen radial insbesondere um die Längsachse in einem Kegel von etwa höchstens 50°, insbesondere etwa 30° emittiert.

13. Beleuchtungs- und/oder Signalgebungsvorrichtung nach einem der Ansprüche 2 bis 12,
**dadurch gekennzeichnet, dass** die Lichtleitfläche (28) aufweist
- eine zylindrische Höhlung (42), deren Boden (41) an einer zur Lichtabgaberichtung (F) rückwärtigen Seite (35) eben ist und in der die Lichtquelle (32) angeordnet ist; sowie
- eine rotationssymmetrische Prismenform (44) an einer zur Lichtabgaberichtung (F) vorderen Seite (33), die gegenüber der zylindrischen Höhlung (42) ausgeführt ist, um alle von der Lichtquelle (32) abgegebenen Lichtstrahlen in die Lichtleitfläche (28) zu reflektieren,
und dass die Lichtquelle (32) eine Lichtquelle ist, die Lichtstrahlen in Längsrichtung in der Hauptlichtabgaberichtung (F) emittiert.

14. Beleuchtungs- und/oder Signalgebungsvorrichtung nach Anspruch 13,
**dadurch gekennzeichnet, dass** die Lichtquelle (32) eine Lichtquelle aufweist, die am Ende eines Lichtleiters angeordnet ist, und dass das andere Ende des Lichtleiters in der Höhlung (42) mit ebenem Boden (41) angeordnet ist, um die Lichtstrahlen in die Lichtleitfläche (28) zu leiten.

15. Beleuchtungs- und/oder Signalgebungsmodul für Kraftfahrzeuge,
**dadurch gekennzeichnet, dass** es mehrere in den vorhergehenden Ansprüchen beschriebene, radial um die Längsachse des Moduls in einer Querebene zum Erzeugen eines ringförmigen Lichtbündels verteilte Vorrichtungen umfasst.

16. Beleuchtungs- und/oder Signalgebungsmodul für Kraftfahrzeuge nach Anspruch 15,
**dadurch gekennzeichnet, dass** es wenigstens vier radial zum Erzeugen eines ringförmigen Lichtbündels verteilte Vorrichtungen mit jeweils einer Lichtquelle und einer Lichtleitfläche umfasst.
